(19) Europäisches Patentamt
European Patent Office
Office européen des brevets

(11) **EP 2 630 447 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **11785299.6**

(22) Anmeldetag: **30.09.2011**

(51) Int Cl.:
*G01C 23/00* (2006.01)     *G01S 13/92* (2006.01)
*G02B 27/01* (2006.01)     *G08G 5/00* (2006.01)

(86) Internationale Anmeldenummer:
**PCT/DE2011/001791**

(87) Internationale Veröffentlichungsnummer:
**WO 2012/051986 (26.04.2012 Gazette 2012/17)**

(54) **VERFAHREN ZUR DARSTELLUNG DER DRIFTWERTE EINES LUFTFAHRZEUGS**

METHOD FOR PRESENTING THE DRIFT VALUES OF AN AIRCRAFT

PROCÉDÉ SERVANT À REPRÉSENTER LES VALEURS DE DÉRIVE D'UN VÉHICULE AÉRIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2010 DE 102010049175**

(43) Veröffentlichungstag der Anmeldung:
**28.08.2013 Patentblatt 2013/35**

(73) Patentinhaber: **Airbus Defence and Space GmbH**
**85521 Ottobrunn (DE)**

(72) Erfinder: **MÜNSTERER, Thomas**
**88069 Tettnang (DE)**

(74) Vertreter: **Meel, Thomas**
**Airbus Defence and Space GmbH**
**Patentabteilung**
**88039 Friedrichshafen (DE)**

(56) Entgegenhaltungen:
**US-A1- 2006 238 377**

**Beschreibung**

Die Erfindung betrifft ein Verfahren zur Darstellung der Driftwerte eines Luftfahrzeugs nach dem Oberbegriff des Anspruch 1.

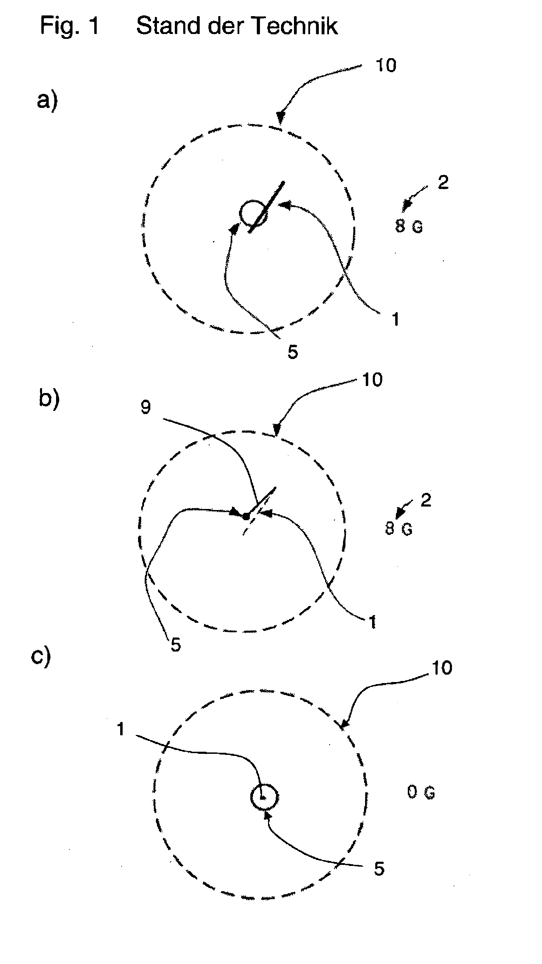

Bei einer nicht-autonomen, sensorunterstützten Hubschrauberlandung unter eingeschränkten Sichtverhältnissen, z.B. Brownout- oder Whiteout-Bedingungen, muss dem Piloten eine leicht erkennbare, eindeutige Darstellung der Driftrichtung und Driftgeschwindigkeit des Hubschraubers über Grund präsentiert werden. Die Darstellung einer derartigen Symbolik in einem HMI (Human- Machine Interface) erfolgt entweder auf einem Head-Down-Display (Multifunktionsdisplay MFD), auf einem Head-Up Display (HUD) oder einem Helmet Mounted Sight-Display (HMS/D). Es ist gängige Praxis, die Driftgeschwindigkeit durch einen sogenannten Driftvektor (Bezugsziffer 1, Fig. 1) darzustellen, also einer von einem festen Endpunkt (typischerweise dem Zentrum des Darstellungsbereichs) ausgehenden Linie (mit oder ohne Darstellung des Anfangs- und Endpunkts), deren Länge direkt proportional zur momentanen Driftgeschwindigkeit ist und dessen Richtung die momentane Driftrichtung angibt (siehe z.B. Szoboszlay, Z. et.al., "Brown-Out Symbology Simulation (BOSS) on the NASA Ames Vertical Motion Simulator," American Helicopter Society 64th Annual Forum, 2008).

Für alle genannten Anzeigegeräte gilt, dass der darzustellende Wertebereich für die Driftgeschwindigkeit über Grund in der Landephase sehr groß ist. Für landende Hubschrauber liegt ein typischer Anzeigebereich zwischen 30 und 0 Knoten (kts). Das Problem, das daraus für die oben beschriebene, proportionale Darstellung folgt, ist, dass das HMI der Driftanzeige einerseits geringste Seitwärtsdriften bei der Landung klar erkennbar darstellen muss, da diese aus Sicht der Flugzulassung als hochkritisch eingestuft wird (der kritische Maximalwert der Seitwärtsdrift bei einem Hubschrauber vom Typ CH53 liegt z.B. bei 0,4 kts.), andererseits aber die Display-Auflösung der Anzeigegeräte physikalisch begrenzt ist, was die Darstellungslänge des Driftvektors hardwaretechnisch einschränkt. So erfolgt bei typischen HMI-Visualisierungskonzepten zur Darstellung des Driftvektors auf gängigen MFDs die Darstellung eines sicherheitskritischen Driftwerts von 0,4 kts mit einer Länge von weniger als 5 Pixel.

Es ist offensichtlich, dass der Pilot die Länge und u.U. auch die Richtung des Driftvektors bei kleinen Driftwerten, wie sie typischerweise bei der Landung auftreten, optisch nicht mehr zuverlässig auf dem Display auflösen kann.

In der US2006/0238377 A1 ist ein Verfahren zur Darstellung der aktuellen Driftwerte eines Luftfahrzeugs bekannt, bei der die laterale Komponente des Driftvektors erst nach Multiplikation mit einem Skalierungsfaktor auf dem Anzeigegerät dargestellt wird. Diese Maßnahme soll den Piloten besser bei der Visualisierung unterstützen. Der Skalierungsfaktor wird abhängig von der Größe der Anzeigefläche gewählt.

Es ist Aufgabe der Erfindung, ein Verfahren zur Darstellung des Driftvektors anzugeben, das auch bei kleinen Driftwerten eine für den Piloten gut erkennbare Darstellung erzeugt, ohne dass die Qualität der Darstellung bei höheren Driftwerten herabgesetzt werden muss.

Diese Aufgabe wird mit dem Verfahren nach Anspruch 1 gelöst. Vorteilhafte Ausführungen der Erfindung sind Gegenstand von weiteren Ansprüchen.

Gemäß der Erfindung ist für Driftgeschwindigkeiten unterhalb eines vorgegebenen Schwellwerts eine skalierte Darstellung der Driftvektorlänge vorgesehen, die von dem bekannten rein proportionalen Zusammenhang zwischen aktueller Driftgeschwindigkeit und der zugehörigen Darstellungslänge des Driftvektors in der Anzeigevorrichtung abweicht, und zwar derart, dass die Driftwerte unterhalb des Schwellwerts verlängert (im Vergleich zur proportionalen Darstellung) dargestellt werden. Im Geschwindigkeitsbereich oberhalb des Schwellwerts dagegen verbleibt es bei der herkömmlichen proportionalen Darstellung. Zwischen den beiden Darstellungsweisen wird ein stetiger Übergang gewährleistet, so dass Sprünge in der Darstellung vermieden werden.

Vorteilhaft kann eine logarithmierte Darstellung verwendet werden.

Mit dem erfindungsgemäßen Verfahren wird eine gute Sichtbarkeit des Driftvektors über den gesamten darzustellenden Wertebereich und insbesondere bei kleinen Driftwerten erreicht. Insbesondere ist ein manuelles Umschalten zwischen unterschiedlichen Auflösungen der Anzeige oder die Verwendung mehrerer Anzeigevorrichtungen nicht notwendig. Somit kann ein wesentlicher Beitrag zu einer gefahrlosen, sicheren Landung geleistet werden.

Die Erfindung wird anhand von Beispielen unter Bezugnahme von Figuren näher erläutert. Es zeigen:

Fig. 1    zwei Anzeigeverfahren gemäß Stand der Technik;

Fig. 2    die Darstellung des Zusammenhangs zwischen aktueller Driftgeschwindigkeit und zugehöriger Darstellungslänge des Driftvektors gemäß der Erfindung;

Fig. 3    das erfindungsgemäße Darstellungsverfahren in einer Gegenüberstellung mit dem bekannten Anzeigeverfahren nach Fig. 1 a,c bei drei verschiede nen Driftwerten;

Fig. 4    einen Hardware-Aufbau zur Realisierung des erfindungsgemäßen Verfahrens.

Fig. 1 a zeigt eine schematische Darstellung des Driftvektors gemäß Stand der Technik. Die Drift des Hubschraubers über Grund wird mit Hilfe eines Driftvektors 1 dargestellt. Dessen Länge gibt den Betrag der Geschwindigkeit über Grund an. Die Richtung des Vektors 1 gibt die Richtung der Drift über Grund in Relation zur Hubschrauberlängsachse an (typischerweise stellt dabei ein Ausschlag des Vektors nach oben eine Vorwärtsdrift dar). Der Referenzkreis 10 dient der Beurteilung der relativen Länge des Geschwindigkeitsvektors 1 und entspricht in diesem Beispiel einer Driftgeschwindigkeit von 15 kts. Er kann auch nur implizit als Grenze des Darstellungsbereichs angenommen werden und wird in diesem Fall nicht gezeichnet.

Zusätzlich verfügen moderne sensorunterstützte Landehilfen über die Darstellung eines Vorschauwerts der Drift (Acceleration Cue), in Fig. 1a und 1c in Form eines Kreises 5 ausgebildet, dessen Zentrum angibt, wo sich die Spitze des Driftvektors 1 in einer festgelegten Zeitdifferenz (typisch 3 bis 4 Sekunden) bei gleichbleibender Beschleunigung befinden wird. Zusätzlich wird in Fig. 1 der Absolutbetrag 2 der Geschwindigkeit über Grund auf dem betreffenden Anzeigegerät jeweils auch numerisch angeben (hier 8 kts schräg nach rechts vorn).

Ebenfalls Stand der Technik sind Ausprägungen der Driftdarstellung, wie in Fig. 1b dargestellt (siehe z.B. A.J.C. de Reus, M. van Witzenburg, "Pilot-in-the-loop evaluation of a novel acceleration symbol for the RNLAF AS-532 U2 Cougar helicopter HUD" im Bericht NLR-TP-2007-757 des National Aerospace Laboratory NLR, Niederlande, November 2007). Der Driftvektor 1 ist hier lediglich indirekt dargestellt als Ausgangspunkt eines Vektors 9, der die Spitze des Driftvektors (der ansonsten überhaupt nicht dargestellt ist) mit dem Acceleration Cue 5 (hier in Form eines ausgefüllten Kreises) verbindet. Da sich der Driftvektor 1 nur implizit aus der Darstellung des Vektors 9 ergibt, ist er in Fig. 1b gestrichelt eingezeichnet.

Fig. 1c zeigt dasselbe Darstellungsverfahren wie Fig. 1a, jedoch hier bei einem relativ kleinen Driftwert nahe Null. Entsprechend ist der dargestellte Driftvektors sehr klein. Für den Piloten ist in dieser Situation nur sehr schwer erkennbar, ob eine Seitwärtsdrift existiert und ob sie unterhalb oder oberhalb des zulässigen Maximalwerts (z.B. 0,4 kts) für eine Landung liegt. Je nachdem, ob eine Nullpunktreferenz, d.h. ein Ursprung des Driftvektors, angezeigt wird, ist es auch nicht möglich, die Richtung der existierenden Drift für Korrekturmaßnahmen eindeutig und schnell zu erkennen. Eine eingezeichnete Nullpunktreferenz würde andererseits die noch vorhandene Restlänge des Driftvektors überdecken.

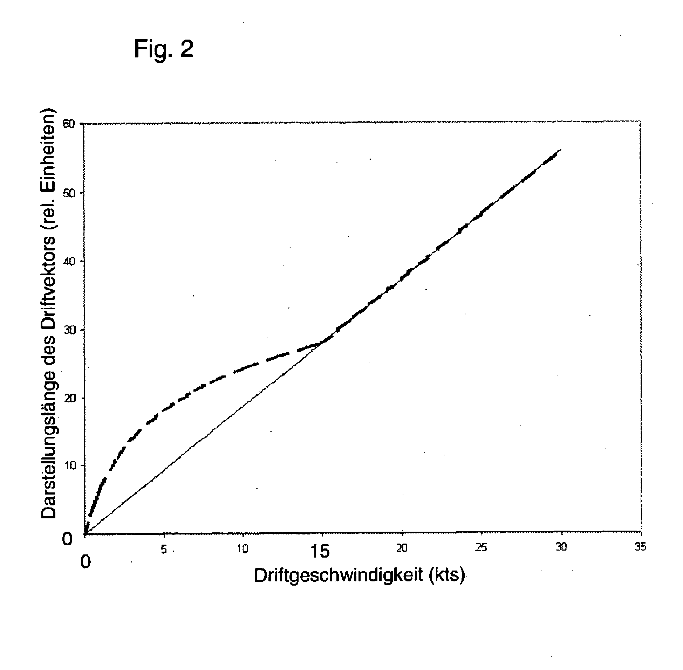

Fig. 2 illustriert die erfindungsgemäße Lösung. Dargestellt ist der Zusammenhang zwischen der Driftgeschwindigkeit (horizontale Achse) zu der dargestellten Länge des Driftvektors in einer Anzeigevorrichtung (vertikale Achse).

Oberhalb eines vorgegebenen Schwellwerts der Driftgeschwindigkeit (hier bei 15 kts) erfolgt die Darstellung linear. Unterhalb des Schwellwerts erfolgt eine Abweichung von der proportionalen Darstellung, die zu einer Verlängerung des dargestellten Vektors (im Vergleich zur proportionalen Darstellung) führt. In dem gezeigten Beispiel ist ein logarithmischer Zusammenhang gewählt.

Die beiden Kurvenbereiche gehen stetig ineinander über, so dass Sprünge beim Übergang vermieden werden. Wie man ebenfalls aus Fig. 2 erkennt, beträgt die dargestellte Vektorlänge 0 Pixel, wenn die Driftgeschwindigkeit gleich 0 kts ist.

Im Bereich unterhalb des Schwellwerts eignet sich insbesondere der folgende Zusammenhang für die Darstellung des Driftvektors:

$$d_v = \frac{\log(v + 1[kt])}{\log 16[kt]} \cdot d_{15kt}.$$

wobei der Übergang zwischen linearer und skalierter (hier: logarithmischer) Darstellung bei 15 kts gewählt wurde. Dabei ist $d_v$ die neu darzustellende Länge des Driftvektors, $d_{15kt}$ die Länge des Driftvektors bei linearer Darstellung am Übergangspunkt 15 kts und $V$ die darzustellende Geschwindigkeit in Knoten. Obige Formel erfüllt die oben aufgestellten Forderungen an die Stetigkeit des Übergangs (hier bei 15 kts) sowie an die verschwindende Länge bei 0 kts.

Zusätzlich kann auch eine optische Warnung, bzw. Hervorhebung des Driftvektors bei Überschreiten der für eine Landung zulässigen Seitwärtsdrift erfolgen. Dies kann durch Blinken (z.B. für monochrome HMS/Ds) oder/und durch farbliche Hervorhebung (Driftvektor rot) auf mehrfarbfähigen Darstellungsmedien erfolgen.

Alternativ kann das Unterschreiten der zulässigen maximalen Seitwärtsdrift auch dadurch dargestellt werden, dass der Driftvektor entweder komplett oder aber dessen Seitwärtskomponente verschwindet. Das heißt, dass bei einer Landung ohne Vorwärts- und Seitwärtsdrift der Driftvektor vom Anzeigemedium verschwindet. Bei einer Landung mit geplanter Vorwärtsdrift wird nur noch eine genau nach vorn ausgerichtete Linie als Driftvektor dargestellt werden.

Vorteilhaft erfolgt die Darstellung des Vorschauwerts (Acceleration Cue) für die Driftgeschwindigkeit nach denselben Grundsätzen wie sie für den aktuellen Driftvektor wie oben beschrieben vorgesehen sind. Das bedeutet also, dass der Abstand des Acceleration Cues 5 vom Ursprung der Darstellung nach dem in Fig. 2 beispielhaft dargestellten Zusammenhang dargestellt wird.

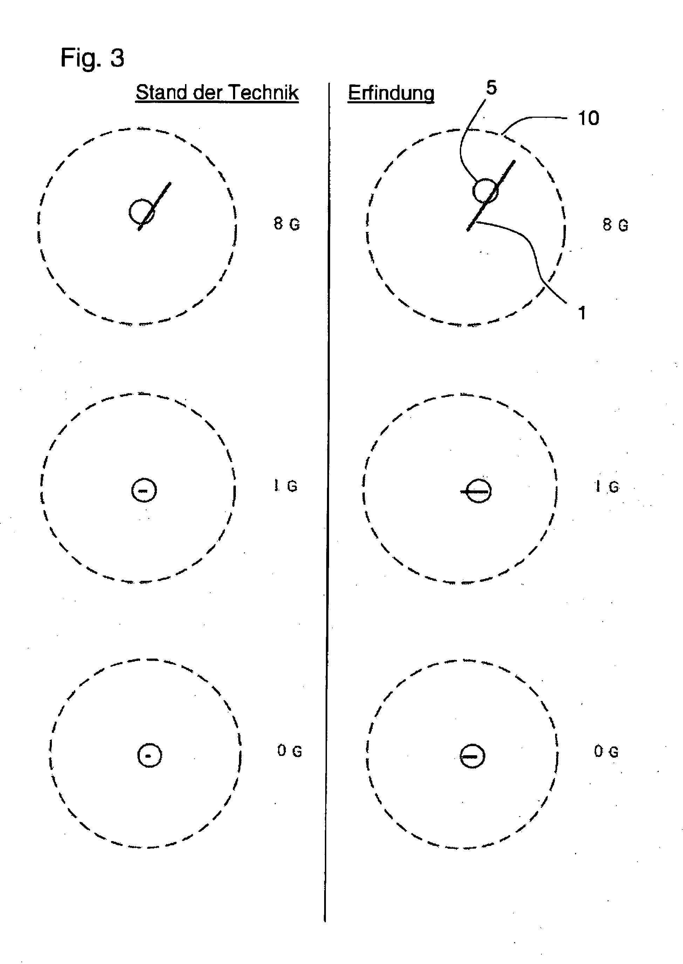

In dem Beispiel nach Fig. 3 ist der Driftvektor explizit durch eine Linie zwischen dem festen Ursprung der Darstellung und seinem Endpunkt dargestellt (insoweit analog zu dem Verfahren nach Fig. 1 a,c). Selbstverständlich kann das erfindungsgemäße Verfahren auch mit einer lediglich impliziten Darstellung (Fig. 1 b) des Driftvektors kombiniert werden. In diesem Fall erfolgt die Darstellung eines Vektors vom Endpunkt des Driftvektors zum Acceleration Cue, während der Driftvektor selbst gar nicht eingezeichnet ist. Der Driftvektor ergibt sich somit nur indirekt aus dem Anfangspunkt dieses dargestellten Vektors.

Die erfindungsgemäße Lösung sorgt für eine wesentliche Verbesserung bei der Wahrnehmung des Driftvektors im Bereich kleiner Driftgeschwindigkeiten. Die Beispiele in der Fig. 3 sollen dies verdeutlichen. Die Fig. 3 zeigt Anzeigen für Driftgeschwindigkeiten von 8 kts, 1 kts und 0,4 kts Drift. Links ist jeweils die bekannte HMI Symbolik mit linearer Darstellung des Driftvektors 1 gezeigt, rechts wird die dazu korrespondierende erfindungsgemäße Lösung gezeigt (jeweils mit überlagertem Vorschauwert 5 (Acceleration Cue). Der Referenzkreis 10 ist wieder bei 15 kts gewählt.

Bei allen drei dargestellten Driftgeschwindigkeiten befindet man sich im logarithmischen Bereich der Darstellung nach Fig. 2. Bereits bei der Situation mit 8 kts ist gegenüber der herkömmlichen Darstellung eine Verbesserung zu erkennen, in dem der Geschwindigkeitsvektor deutlich sichtbar verlängert ist. Bei den sehr kleinen Driftgeschwindigkeiten von 1 und 0,4 kts ist bei der herkömmlichen Darstellung für den Piloten kaum noch eine veriässliche Information zu entnehmen, während die erfindungsgemäße Darstellung noch eine deutliche Wahrnehmung hinsichtlich Länge des Geschwindigkeitsvektors 1 und Lage des zugehörigen Acceleration Cues 5 erlaubt.

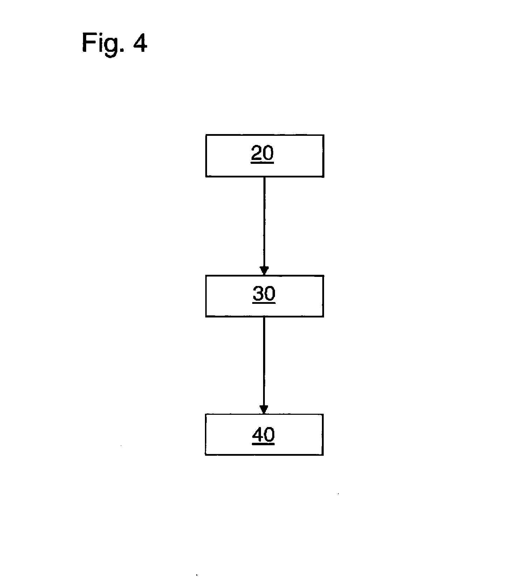

Fig. 4 zeigt das Blockschaltbild zu einer möglichen Hardwarerealisierung des erfindungsgemäßen Verfahrens. Bezugsziffer 20 bezeichnet einen Sensor zur Ermittlung der Horizontalgeschwindigkeit des Helikopters, typischerweise ein GPS gekoppeltes Inertial-Navigationsgerät. Der gewonnene Sensorwert wird an einen Mikroprozessor 30 übertragen, der einen Vergleich mit dem Schwellwert zur Unterscheidung der beiden Darstellungsprinzipien durchführt. Je nachdem, ob der Sensorwert oberhalb oder unterhalb des Schwellwerts liegt, wird die Länge des darzustellenden Driftvektors nach einer der beiden Relationen, d.h. linear oder logarithmisch berechnet und an das Display 40 zur Darstellung weitergegeben.

Bei dem Display 40 kann es sich insbesondere um ein Head-Down-Display (Multifunktionsdisplay MFD), ein Head-Up Display (HUD) oder ein Helmet Mounted Sight-Display (HMS/D) handeln.

## Patentansprüche

1. Verfahren zur Darstellung der aktuellen Driftwerte eines Luftfahrzeugs auf einem Anzeigegerät (40), wobei die Darstellung der Driftwerte in Vektordarstellung erfolgt, **dadurch gekennzeichnet, dass**

    - die Länge des Driftvektors (1) oberhalb eines vorgegebenen Schwellwerts proportional zur aktuellen Driftgeschwindigkeit dargestellt wird, und
    - die Länge des Driftvektors (1) unterhalb des Schwellwerts überproportional zur aktuellen Driftgeschwindigkeit dargestellt wird,

    - wobei am Schwellwert ein stetiger Übergang zwischen den beiden Darstellungsweisen erfolgt.

2. Verfahren nach Anspruch 1, **dadurch gekennzeichnet, dass** der überproportionale Zusammenhang zwischen der aktuellen Driftgeschwindigkeit und der Länge des dargestellten Driftvektors ein logarithmischer ist.

3. Verfahren nach Anspruch 1 oder 2, **dadurch gekennzeichnet, dass** die Darstellung des aktuellen Driftwerts mit einem Vorschauwert für den Driftwert überlagert wird, wobei für dessen Darstellung die in einem der vorangehenden Ansprüche niedergelegten Regeln angewandt werden.

4. Verfahren nach einem der vorangehenden Ansprüche, **dadurch gekennzeichnet, dass** die Vektordarstellung des Driftvektors und/oder seines Vorschauwerts durch Darstellung lediglich ihres Endpunktes im Bezug auf einen festen Ausgangspunkt erfolgt.

5. Verfahren nach Anspruch 4, **dadurch gekennzeichnet, dass** ein durch die Endpunkte von Driftvektor und Vorschauwert definierter Vektor dargestellt wird.

## Claims

1. Method for representing the current drift values of an aircraft on a display device (40), the drift values being represented in vector representation, **characterized**

    - **in that** the length of the drift vector (1) above a prescribed threshold value is represented in a fashion proportional to the current drift velocity, and
    - **in that** the length of the drift vector (1) below the threshold value is represented in a fashion overproportional to the current drift velocity,
    - there being a continuous transition between the two ways of representation at the threshold value.

2. Method according to Claim 1, **characterized in that** the overproportional relationship between the current drift velocity and the length of the represented drift vector is logarithmic.

3. Method according to Claim 1 or 2, **characterized in that** there is superimposed on the representation of the current drift value a predicted value for the drift value, the rules laid down in one of the preceding claims being applied to represent said predicted value.

4. Method according to one of the preceding claims, **characterized in that** the vector representation of the drift vector and/or its predicted value is done by representing only its endpoint with reference to a fixed startpoint.

5. Method according to Claim 4, **characterized in that** a vector defined by the endpoints of drift vector and predicted value is represented.

**Revendications**

1. Procédé de présentation des valeurs effectives de dérive d'un aéronef sur un appareil d'affichage (40), la représentation des valeurs de dérive étant vectorielle, **caractérisé en ce que**
au-dessus d'une valeur de seuil prédéterminée, la longueur du vecteur de dérive (1) est proportionnelle à la vitesse effective de dérive,
**en ce qu'**en dessous de la valeur de seuil, la longueur du vecteur de dérive (1) est plus que proportionnelle à la vitesse effective de dérive et
**en ce qu'**une transition continue entre les deux modes de présentation a lieu à la valeur de seuil.

2. Procédé selon la revendication 1, **caractérisé en ce que** la relation plus que proportionnelle entre la vitesse effective de dérive et la longueur du vecteur de dérive représentée est une relation logarithmique.

3. Procédé selon les revendications 1 ou 2, **caractérisé en ce que** la représentation de la valeur effective de dérive est superposée à une valeur de prédiction de la valeur de dérive, les règles définies dans l'une des revendications précédentes étant appliquées pour sa représentation.

4. Procédé selon l'une des revendications précédentes, **caractérisé en ce que** la représentation vectorielle du vecteur de dérive et/ou de sa valeur de prédiction s'effectue en représentant au moins son point final par rapport à un point initial fixe.

5. Procédé selon la revendication 4, **caractérisé en ce qu'**un vecteur défini par les points finaux du vecteur de dérive et de la valeur de prédiction est représenté.

# Fig. 1    Stand der Technik

a)

b)

c)

Fig. 2

# Fig. 3

Stand der Technik | Erfindung

8 G

1 G

0 G

# Fig. 4

```
┌─────────────────┐
│       20        │
└─────────────────┘
         │
         ▼
┌─────────────────┐
│       30        │
└─────────────────┘
         │
         ▼
┌─────────────────┐
│       40        │
└─────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20060238377 A1

**In der Beschreibung aufgeführte Nicht-Patentliteratur**

• **SZOBOSZLAY, Z.** Brown-Out Symbology Simulation (BOSS) on the NASA Ames Vertical Motion Simulator. *American Helicopter Society 64th Annual Forum,* 2008

• **A.J.C. DE REUS ; M. VAN WITZENBURG.** Pilot-in-the-loop evaluation of a novel acceleration symbol for the RNLAF AS-532 U2 Cougar helicopter HUD. *Bericht NLR-TP-2007-757 des National Aerospace Laboratory NLR, Niederlande,* November 2007